# EUROPEAN PATENT APPLICATION

(11) **EP 2 784 976 A1**
(43) Date of publication of application: **01.10.2014**
(21) Application number: 12874363.0
(22) Date of filing: 26.10.2012
(51) Int. Cl.: H04L 12/02

(54) **VIRTUAL DESKTOP INFRASTRUCTURE (VDI) FILE TRANSMITTING METHOD AND DEVICE**

(71) Applicant: Huawei Technologies Co., Ltd., Shenzhen, Guangdong 518129 (CN)
(72) Inventor: LI, Guang, Shenzhen, Guangdong 518129 (CN); YAO, Ziyang, Shenzhen, Guangdong 518129 (CN); LI, Chunqiang, Shenzhen, Huangdong 518129 (CN); SUN, Fuqing, Shenzhen, Guangdong 518129 (CN)
(74) Representative: Lord, Michael
(86) International application number: PCT/CN2012/083625
(87) International publication number: WO 2014/063367

(57) **Abstract**

The present invention provides a virtual desktop infrastructure VDI file transfer method, which relates to the communications field and can improve compressibility in a VDI file transfer process. The method includes: receiving VDI messages, where the VDI messages at least include a VDI file transfer message; separating the VDI file transfer message from the VDI messages; parsing the separated VDI file transfer message; obtaining a data portion of the VDI file transfer message; compressing the data portion and sending a VDI file transfer message that includes compressed data. The present invention further provides a corresponding apparatus.

## Description

### TECHNICAL FIELD

The present invention relates to the communications field, and in particular, to a VDI (Virtual Desktop Infrastructure, virtual desktop infrastructure) file transfer method and apparatus.

### BACKGROUND

VDI aims to bring excellent responsiveness and customized user experience to intelligent distributed computing, and provide management and security advantages based on a server mode. It provides centralized management for an entire desktop image.

File transfer between a client and a server is performed through a VDI file transfer channel. In the prior art, the WAN (Wide Area Network, wide area network) is optimized. When a file is transferred through the VDI file transfer channel, a VDI file transfer data flow is mixed up with various VDI messages. In addition, content of these VDI messages may be changeable. As a result, a large amount of DRE (Data Redundance Elimination, data redundancy elimination) is caused. A redundant entry cannot be reused. This results in a low compressibility in a VDI file transfer process.

### SUMMARY

The present invention provides a VDI file transfer method and apparatus that can improve compressibility in a VDI file transfer process.

In a first aspect, a VDI file transfer method is provided, where the method includes:
receiving VDI messages, where the VDI messages at least include a VDI file transfer message;
separating the VDI file transfer message from the VDI messages;
parsing the separated VDI file transfer message;
obtaining a data portion of the VDI file transfer message; and
compressing the data portion and sending a VDI file transfer message that includes compressed data, where the compressed data is derived from the data portion.

In a first possible implementation manner of the first aspect, the separating the VDI file transfer message from the VDI messages specifically is:
acquiring a VDI file transfer channel number; and
separating the VDI file transfer message from the VDI messages according to the acquired VDI file transfer channel number.

In combination with the first possible implementation manner of the first aspect, in a second possible implementation manner, the acquiring a VDI file transfer channel number specifically is:
acquiring a VDI negotiation message, where the VDI negotiation message includes the VDI file transfer channel number; and
acquiring the VDI file transfer channel number according to the VDI negotiation message.

In combination with the first aspect, the first possible implementation manner of the first aspect, or the second possible implementation manner of the first aspect, in a third possible implementation manner, the VDI file transfer message includes a write request message and a read response message.

In a second aspect, a VDI file transfer method is provided, where the method includes:
receiving a VDI file transfer message that includes compressed data, where the compressed data is derived from a data portion separated from the VDI file transfer message;
parsing the received VDI file transfer message;
obtaining the compressed data;
decompressing the compressed data to obtain decompressed data; and
sending a VDI file transfer message that includes the decompressed data.

In a first possible implementation manner of the second aspect, the VDI file transfer message includes a write request message and a read response message.

In a third aspect, a VDI file transfer apparatus is provided, where the apparatus includes:
a receiving unit, configured to receive VDI messages, where the VDI messages at least include a VDI file transfer message;
a processing unit, configured to separate the VDI file transfer message from the VDI messages received by the receiving unit, where
the processing unit is further configured to parse the separated VDI file transfer message to obtain a data portion of the VDI file transfer message;
a data redundancy elimination DRE unit, configured to compress the data portion of the VDI file transfer message, where the data portion is obtained by the processing unit; and
a sending unit, configured to send a VDI file transfer message that includes data compressed by the DRE unit, where the compressed data is derived from the data portion.

In a first possible implementation manner of the third aspect, the processing unit includes:
an acquiring module, configured to acquire a VDI file transfer channel number; and
a separating module, configured to separate the VDI file transfer message from the VDI messages according to the VDI file transfer channel number acquired by the acquiring module.

In combination with the first possible implementation manner of the third aspect, in a second possible implementation manner, the acquiring module is specifically configured to:
acquire a VDI negotiation message, where the VDI negotiation message includes the VDI file transfer channel number; and
acquire the VDI file transfer channel number according to the VDI negotiation message.

In combination with the third aspect, the first possible implementation manner of the third aspect, or the second possible implementation manner of the third aspect, in a third possible implementation manner, the VDI file transfer message includes a write request message and a read response message.

In a fourth aspect, a virtual desktop infrastructure VDI file transfer apparatus is provided, where the apparatus includes:
a receiving unit, configured to receive a VDI file transfer message that includes compressed data, where the compressed data is derived from a data portion separated from the VDI file transfer message;
a processing unit, configured to parse the VDI file transfer message received by the receiving unit to obtain the compressed data;
a data redundancy elimination DRE unit, configured to decompress the compressed data obtained by the processing unit to obtain decompressed data; and
a sending unit, configured to send a VDI file transfer message that includes the data decompressed by the DRE unit.

In a first possible implementation manner of the fourth aspect, the VDI file transfer message includes a write request message and a read response message.

In a fifth aspect, a virtual desktop infrastructure VDI file transfer apparatus is provided, including a processor, a communications interface, a memory, and a bus, where:
the processor, the communications interface, and the memory communicate with each other through the bus;
the communications interface is configured to communicate with an external network element;
the memory is configured to store a program; and
the processor is configured to execute the program, where
the program includes a receiving unit, a processing unit, a data redundancy elimination DRE unit, and a sending unit, where
the receiving unit is configured to receive VDI messages, where the VDI messages at least include a VDI file transfer message;
the processing unit is configured to separate the VDI file transfer message from the VDI messages received by the receiving unit;
the processing unit is further configured to parse the separated VDI file transfer message to obtain a data portion of the VDI file transfer message;
the DRE unit is configured to compress the data portion of the VDI file transfer message, where the data portion is obtained by the processing unit; and
the sending unit is configured to send a VDI file transfer message that includes data compressed by the DRE unit, where the compressed data is derived from the data portion.

In a first possible implementation manner of the fifth aspect, the processing unit includes:
an acquiring module, configured to acquire a VDI file transfer channel number; and
a separating module, configured to separate the VDI file transfer message from the VDI messages according to the VDI file transfer channel number acquired by the acquiring module.

In combination with the first possible implementation manner of the fifth aspect, in a second possible implementation manner, the acquiring module is specifically configured to:
acquire a VDI negotiation message, where the VDI negotiation message includes the VDI file transfer channel number; and
acquire the VDI file transfer channel number according to the VDI negotiation message.

In combination with the fifth aspect, the first possible implementation manner of the fifth aspect, or the second possible implementation manner of the fifth aspect, in a third possible implementation manner, the VDI file transfer message includes a write request message and a read response message.

In a sixth aspect, a virtual desktop infrastructure VDI file transfer apparatus is provided, including a processor, a communications interface, a memory, and a bus, where:
the processor, the communications interface, and the memory communicate with each other through the bus;
the communications interface is configured to communicate with an external network element;
the memory is configured to store a program; and
the processor is configured to execute the program, where
the program includes a receiving unit, a processing unit, a data redundancy elimination DRE unit, and a sending unit, where
the receiving unit is configured to receive a VDI file transfer message that includes compressed data, where the compressed data is derived from a data portion separated from the VDI file transfer message;
the processing unit is configured to parse the VDI file transfer message received by the receiving unit to obtain the compressed data;
the DRE unit is configured to decompress the compressed data obtained by the processing unit to obtain decompressed data; and
the sending unit is configured to send a VDI file transfer message that includes the data decompressed by the DRE unit.

In a first possible implementation manner of the sixth aspect, the VDI file transfer message includes a write request message and a read response message.

After the preceding technical solutions are adopted and according to the VDI file transfer method and apparatus that are provided in the present invention, a VDI file transfer message is separated from a VDI message, a data portion is separated from the VDI file transfer message, and the data portion is compressed and sent. This ensures that what is compressed is content of the data portion in the VDI file transfer message. During data compressing, neither other VDI messages nor a data header of the VDI file transfer message exists. Therefore, a high compressibility can be achieved in a VDI file transfer process.

### BRIEF DESCRIPTION OF DRAWINGS

To describe the technical solutions in the embodiments of the present invention or in the prior art more clearly, the following briefly introduces the accompanying drawings required for describing the embodiments or the prior art. Apparently, the accompanying drawings in the following description show merely some embodiments of the present invention, and a person of ordinary skill in the art may still derive other drawings from these accompanying drawings without creative efforts.
FIG. 1 is a flowchart of a VDI file transfer method according to an embodiment of the present invention;
FIG. 2 is a flowchart of a VDI file transfer method according to an embodiment of the present invention;
FIG. 3 is a schematic diagram of a VDI file transfer method according to an embodiment of the present invention;
FIG. 4 is a structural block diagram of a VDI file transfer apparatus according to an embodiment of the present invention;
FIG. 5 is a structural block diagram of a VDI file transfer apparatus according to an embodiment of the present invention;
FIG. 6 is a schematic diagram of a VDI file transfer apparatus according to an embodiment of the present invention; and
FIG. 7 is a schematic diagram of a VDI file transfer apparatus according to an embodiment of the present invention.

### DESCRIPTION OF EMBODIMENTS

The following clearly and completely describes the technical solutions in the embodiments of the present invention with reference to the accompanying drawings in the embodiments of the present invention. Apparently, the described embodiments are merely a part rather than all of the embodiments of the present invention. All other embodiments obtained by a person of ordinary skill in the art based on the embodiments of the present invention without creative efforts shall fall within the protection scope of the present invention.

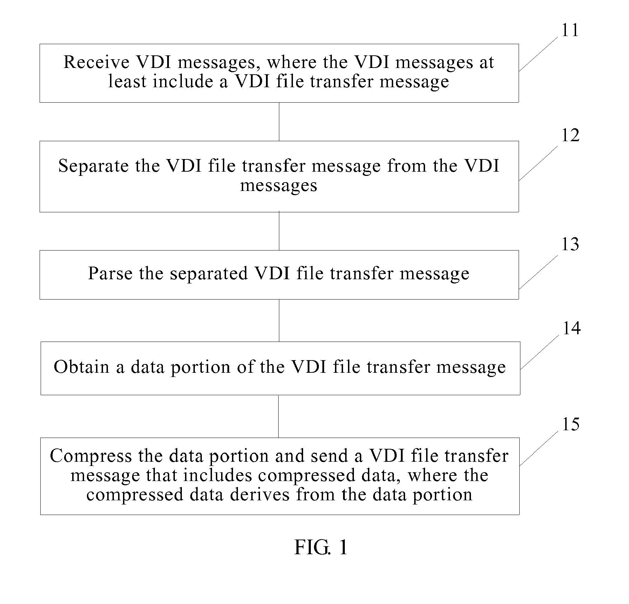

FIG. 1 is a flowchart of a VDI file transfer method according to an embodiment of the present invention. An entity which performs the VDI file transfer method according to this embodiment of the present invention may be any network device that has a routing function, such as a router or a switch. For ease of description, a router serving as the entity is used as an example for description in the following.

Referring to FIG. 1, the VDI file transfer method according to this embodiment of the present invention may include:
11. Receive VDI messages, where the VDI messages at least include a VDI file transfer message.

The VDI file transfer message may include a write request (write request) message and a read response (read response) message.

In this embodiment of the present invention, the VDI message may include various kinds of messages. In addition to the VDI file transfer message, it may further include, for example, a cache message, a bitmap update message, and the like.

12. Separate the VDI file transfer message from the received VDI message.

In this embodiment of the present invention, the VDI file transfer message may be separated from the VDI messages in various manners. For example, one manner for separating the VDI file transfer message from the VDI messages may be:
acquiring a VDI file transfer channel number; and
separating the VDI file transfer message from the VDI messages according to the acquired VDI file transfer channel number.

Specifically, after the VDI file transfer channel number is acquired, all VDI file transfer messages may be incorporated into a VDI file transfer channel that corresponds to the VDI file transfer channel number. In this way, only VDI file transfer messages rather than other VDI messages exist on the VDI file transfer channel.

For example, the acquiring a VDI file transfer channel number may specifically be:
acquiring a VDI negotiation message, where the VDI negotiation message includes the VDI file transfer channel number; and
acquiring the VDI file transfer channel number according to the VDI negotiation message.

In this embodiment of the present invention, the VDI file transfer channel number may be acquired by using a VDI negotiation message, where the VDI negotiation message may be acquired when a client exchanges information with a server. Specifically, before a VDI file is transferred, the client exchanges information with the server to obtain necessary information for VDI file transfer. In this process, the client sends the VDI negotiation message to the server. Therefore, a router arranged between the client and the server can acquire the VDI file transfer channel number by receiving the VDI negotiation message sent by the client.

13. Parse the separated VDI file transfer message.

After separating the VDI file transfer message from the VDI messages, the router parses the separated VDI file transfer message. A data header portion of the separated VDI file transfer message may be separated from a data portion of the separated VDI file transfer message through parsing.

24. Obtain a data portion of the VDI file transfer message.

After separating the data header portion of the separated VDI file transfer message from the data portion of the separated VDI file transfer message through parsing, the router obtains the data portion of the VDI file transfer message.

When the VDI file transfer message specifically is a write request (write request) message and/or a read response (read response) message, a data header portion of the write request message and/or the read response message is separated from a data portion of the write request message and/or the read response message, respectively.

14. Compress the data portion and send a VDI file transfer message that includes compressed data, where the compressed data is derived from the data portion.

After obtaining the data portion of the VDI file transfer message, the router compresses the data portion of the VDI file transfer message and transmits the compressed data and a message header portion of the VDI file transfer message to a peer router.

In this embodiment of the present invention, the "peer router" refers to a router on the other end of communications. For example, a peer router of a router near a client side is a router near a server side; and a peer router of a router near the server side is a router near the client side.

According to the VDI file transfer method provided in the present invention, a VDI file transfer message is separated from a VDI message, a data portion is separated from the VDI file transfer message, and the data portion is compressed and sent. This ensures that what is compressed is content of the data portion in the VDI file transfer message. During data compressing, neither other VDI messages nor a data header of the VDI file transfer message exists. Therefore, a high compressibility can be achieved in a VDI file transfer process.

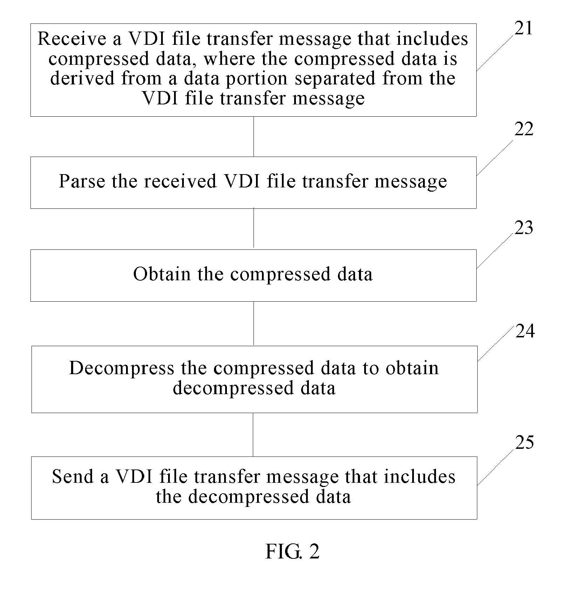

FIG. 2 is a flowchart of a VDI file transfer method according to an embodiment of the present invention. It should be noted that, an entity which performs the VDI file transfer method according to this embodiment of the present invention may be any network device that has a routing function, such as a router, or a switch. For ease of description, only the router is used as an example for description in the following.

Referring to FIG. 2, corresponding to the method illustrated in FIG. 1, this embodiment of the present invention further provides a VDI file transfer method, where based on the description from the view of a peer router, the method may include:
21. Receive a VDI file transfer message that includes compressed data, where the compressed data is derived from a data portion separated from the VDI file transfer message.

In this embodiment of the present invention, the compressed data is borne in the VDI file transfer message.

The VDI file transfer message may include a write request (write request) message and a read response (read response) message.

22. Parse the received VDI file transfer message.

After receiving the VDI file transfer message that includes the compressed data, the peer router may separate the compressed data from the VDI file transfer message by parsing the VDI file transfer message that includes the compressed data.

23. Obtain the compressed data.

24. Decompress the compressed data to obtain decompressed data.

25. Send a VDI file transfer message that includes the decompressed data.

After decompressing the compressed data, the peer router, in combination with a message header of the received VDI file transfer message, encapsulates the decompressed data and the message header into a VDI file transfer message, and sends the VDI file transfer message that includes the decompressed data.

When the compressed data comes from a client side, the encapsulated VDI file transfer message is sent to a server; and when the compressed data comes from a server side, the encapsulated VDI file transfer message is sent to a client.

According to the VDI file transfer method provided in the present invention, a VDI file transfer message is separated from a VDI message, a data portion is separated from the VDI file transfer message, and the data portion is compressed and sent. This ensures that what is compressed is content of the data portion in the VDI file transfer message. During data compressing, neither other VDI messages nor a data header of the VDI file transfer message exists. Therefore, a high compressibility can be achieved in a VDI file transfer process.

For a better understanding of the present invention, specific embodiments are used as examples in the following to further describe the present invention. It should also be noted that, embodiments described in the following are merely a part of the embodiments of the present invention. A person skilled in the art may easily conceive other embodiments based on the content in the present invention. These embodiments shall fall within the scope of the present invention.

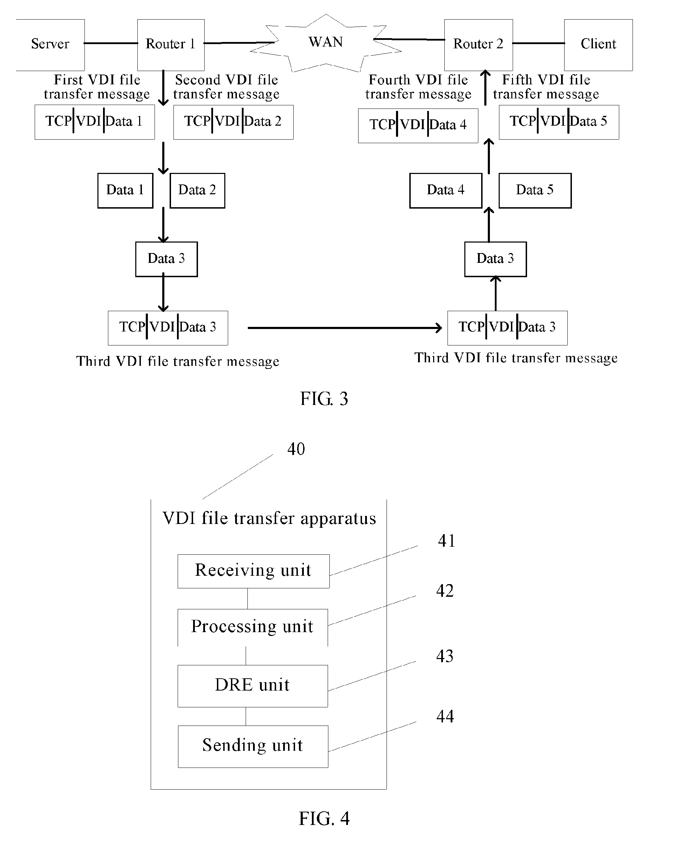

FIG. 3 is a schematic diagram of a VDI file transfer method according to an embodiment of the present invention. Referring to FIG. 3, this embodiment provides a VDI file transfer method, the method includes:
A client sends a VDI negotiation message to a server (for example, a server on a desktop cloud data center), where the VDI negotiation message includes a VDI file transfer channel number.

A router 1 and a router 2 that are arranged between the client and the server acquire the VDI file transfer channel number by receiving the VDI negotiation message sent by the client.

The router 1 receives a VDI message sent by the server, where the VDI message at least includes a VDI file transfer message.

The router 1 separates the VDI file transfer message from the VDI messages according to the acquired VDI file transfer channel number. As shown in FIG. 3, two VDI file transfer messages are token as examples: a first VDI file transfer message that includes data 1 and a second VDI file transfer message that includes data 2. These two VDI file transfer messages are used as examples for description in the following.

The router 1 parses the first VDI file transfer message and the second VDI file transfer message, so as to separate the data 1 and the data 2 from these two VDI file transfer messages, respectively.

The router 1 uses a DRE engine to compress the separated data 1 and data 2 into data 3, encapsulates the compressed data 3 and message headers of the VDI file transfer messages into a third VDI file transfer message, and sends the third VDI file transfer message to the router 2.

The router 2 receives the third VDI file transfer message that includes the data 3 and is sent by the router 1; and the router 2 parses the third VDI file transfer message to obtain the compressed data 3.

The router 2 uses the DRE engine to decompress the data 3 to obtain decompressed data 4 and data 5, where the decompressed data 4 may be the same as or different from the data 1 or the data 2, and the decompressed data 5 may be the same as or different from the data 1 or the data 2. This is not limited in the present invention.

The router 2 encapsulates the data 4, the data 5, and a message header of the VDI file transfer message into different VDI file transfer messages (that is, a fourth VDI file transfer message and a fifth VDI file transfer message), respectively, and sends the encapsulated VDI file transfer messages to the client.

It should be noted that, VDI file transfer from the server to the client has been described above, and the process of VDI file transfer from the client to the server is similar to that of the description above. No further details are provided herein.

According to the VDI file transfer method provided in the present invention, a VDI file transfer message is separated from a VDI message, a data portion is separated from the VDI file transfer message, and the data portion is compressed and sent. This ensures that what is compressed is content of the data portion in the VDI file transfer message. During data compressing, neither other VDI messages nor a data header of the VDI file transfer message exists. Therefore, a high compressibility can be achieved in a VDI file transfer process.

FIG. 4 is a structural block diagram of a VDI file transfer apparatus according to an embodiment of the present invention. Referring to FIG. 4, this embodiment of the present invention provides a VDI file transfer apparatus 40, where the apparatus corresponds to the method illustrated in FIG. 1. The apparatus 40 may include a receiving unit 41, a processing unit 42, a DRE unit 43, and a sending unit 44.

The receiving unit 41 is configured to receive VDI messages, where the VDI messages at least include a VDI file transfer message.

The processing unit 42 is configured to separate the VDI file transfer message from the VDI messages received by the receiving unit 41.

The processing unit 42 is further configured to parse the separated VDI file transfer message to obtain a data portion of the VDI file transfer message.

The DRE unit 43 is configured to compress the data portion of the VDI file transfer message, where the data portion is obtained by the processing unit 42.

The sending unit 44 is configured to send a VDI file transfer message that includes data compressed by the DRE unit 43, where the compressed data is derived from the data portion.

The VDI file transfer apparatus provided in the present invention separates a VDI file transfer message from a VDI message, separates a data portion from the VDI file transfer message, and compresses the data portion and sends it. This ensures that what is compressed is content of the data portion in the VDI file transfer message. During data compressing, neither other VDI messages nor a data header of the VDI file transfer message exists. Therefore, a high compressibility can be achieved in a VDI file transfer process.

In an embodiment, optionally, the processing unit 42 may include:
an acquiring module, configured to acquire a VDI file transfer channel number, where the acquiring module may be specifically configured to acquire a VDI negotiation message, where the VDI negotiation message includes the VDI file transfer channel number, and acquire the VDI file transfer channel number according to the VDI negotiation message; and
a separating module, configured to separate the VDI file transfer message from the VDI messages according to the VDI file transfer channel number acquired by the acquiring module.

In an embodiment, the VDI file transfer message may include a write request message and a read response message.

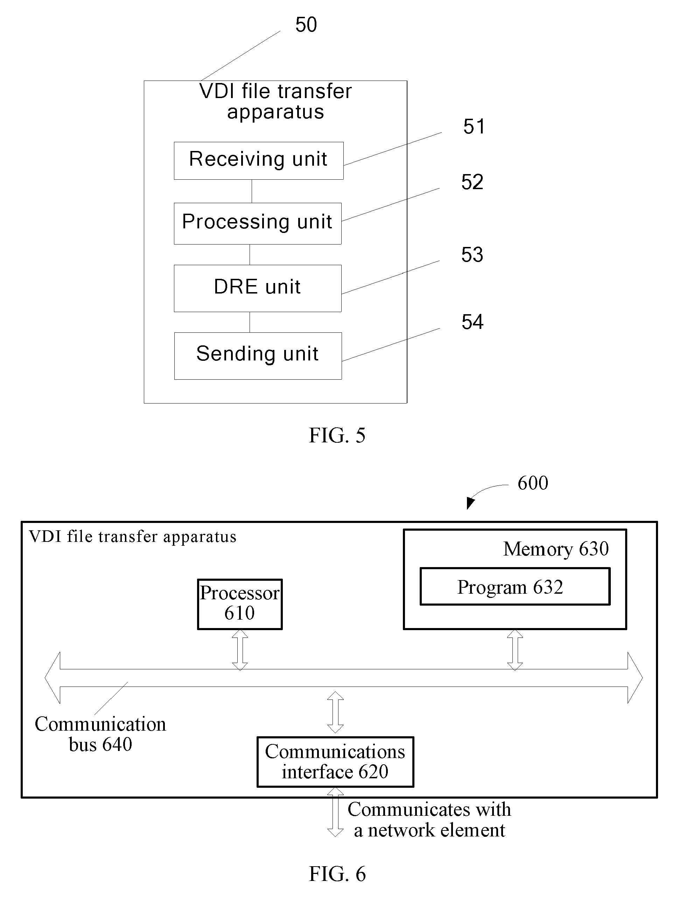

FIG. 5 is a structural block diagram of a VDI file transfer apparatus according to an embodiment of the present invention. Referring to FIG. 5, this embodiment of the present invention provides a VDI file transfer apparatus 50, where the apparatus corresponds to the method illustrated in FIG. 2. The apparatus 50 may include a receiving unit 51, a processing unit 52, a DRE unit 53, and a sending unit 54.

The receiving unit 51 is configured to receive a VDI file transfer message that includes compressed data, where the compressed data is derived from a data portion separated from the VDI file transfer message.

The processing unit 52 is configured to parse the VDI file transfer message received by the receiving unit 51 to obtain the compressed data.

The DRE unit 53 is configured to decompress the compressed data obtained by the processing unit 52 to obtain decompressed data.

The sending unit 53 is configured to send a VDI file transfer message that includes the data decompressed by the DRE unit 53.

The VDI file transfer message includes a write request message and a read response message.

The VDI file transfer apparatus provided in the present invention separates a VDI file transfer message from a VDI message, separates a data portion from the VDI file transfer message, and compresses the data portion and sends it. This ensures that what is compressed is content of the data portion in the VDI file transfer message. During data compressing, neither other VDI messages nor a data header of the VDI file transfer message exists. Therefore, a high compressibility can be achieved in a VDI file transfer process.

It should be noted that, the VDI file transfer apparatus may be a router or a switch, and certainly may be another network device that is capable of implementing the preceding functions. This is not limited in the present invention.

It should be noted that, in the preceding VDI file transfer apparatus, all included units are divided only according to functions and logic, but the present invention is not limited to the preceding division as long as corresponding functions can be implemented. In addition, specific names of functional units are used to distinguish each other only, but not used to limit the protection scope of the present invention.

A person of ordinary skill in the art may understand that all or a part of the steps of the methods in the embodiments may be implemented by a program instructing relevant hardware. The program may be stored in a computer readable storage medium. The storage medium may be a read-only memory, a magnetic disk, an optical disk, or the like.

FIG. 6 is a schematic diagram of a VDI file transfer apparatus according to an embodiment of the present invention. Referring to FIG. 6, a VDI file transfer apparatus 600 in this embodiment of the present invention may be any network device that has a routing function, such as a router or a switch. The VDI file transfer apparatus 600 includes:
a processor (processor) 610, a communications interface (Communications Interface) 620, a memory (memory) 630, and a bus 640.

The processor 610, the communications interface 620, and the memory 630 communicate with each other through the bus 640.

The communications interface 620 is configured to communicate with an external network element, such as a router, a user equipment, or a server.

The processor 610 is configured to execute a program 632.

Specifically, the program 632 may include a program code, where the program code includes a computer operation instruction.

The processor 610 may be a central processing unit CPU, an application specific integrated circuit ASIC (Application Specific Integrated Circuit), or one or more integrated circuits configured to implement this embodiment of the present invention.

The memory 630 is configured to store the program 632. The memory 630 may include a high-speed RAM memory and may further include a non-volatile memory (non-volatile memory), for example, at least one disk memory. The program 632 may specifically include a receiving unit 41, a processing unit 42, a DRE unit 43, and a sending unit 44.

The receiving unit 41 is configured to receive VDI messages, where the VDI messages at least include a VDI file transfer message.

The processing unit 42 is configured to separate the VDI file transfer message from the VDI messages received by the receiving unit 41.

The processing unit 42 is further configured to parse the separated VDI file transfer message to obtain a data portion of the VDI file transfer message.

The DRE unit 43 is configured to compress the data portion of the VDI file transfer message, where the data portion is obtained by the processing unit 42.

The sending unit 44 is configured to send a VDI file transfer message that includes data compressed by the DRE unit 43, where the compressed data is derived from the data portion.

In an embodiment, optionally, the processing unit 42 may include:
an acquiring module, configured to acquire a VDI file transfer channel number, where the acquiring module may be specifically configured to acquire a VDI negotiation message, where the VDI negotiation message includes the VDI file transfer channel number, and acquire the VDI file transfer channel number according to the VDI negotiation message; and
a separating module, configured to separate the VDI file transfer message from the VDI messages according to the VDI file transfer channel number acquired by the acquiring module.

In an embodiment, the VDI file transfer message may include a write request message and a read response message.

It should be noted that, the specific implementation of each unit of the program 632 is the same as that of a corresponding unit in the embodiment illustrated in FIG. 4.

The VDI file transfer apparatus provided in the present invention separates a VDI file transfer message from a VDI message, separates a data portion from the VDI file transfer message, and compresses the data portion and sends it. This ensures that what is compressed is content of the data portion in the VDI file transfer message. During data compressing, neither other VDI messages nor a data header of the VDI file transfer message exists. Therefore, a high compressibility can be achieved in a VDI file transfer process.

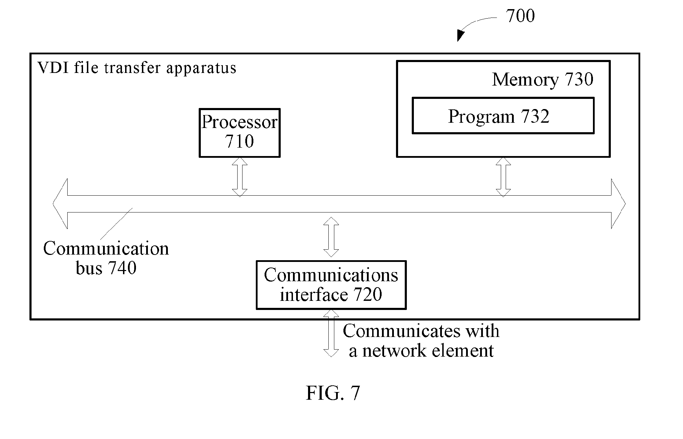

FIG. 7 is a schematic diagram of a VDI file transfer apparatus according to an embodiment of the present invention. Referring to FIG. 7, a VDI file transfer apparatus 700 in this embodiment of the present invention may be any network device that has a routing function, such as a router, or a switch. The VDI file transfer apparatus 700 includes:
a processor (processor) 710, a communications interface (Communications Interface) 720, a memory (memory) 730, and a bus 740.

The processor 710, the communications interface 720, and the memory 730 communicate with each other through the bus 740.

The communications interface 720 is configured to communicate with an external network element, such as a router, a user equipment, or a server.

The processor 710 is configured to execute a program 732.

Specifically, the program 732 may include a program code, where the program code includes a computer operation instruction.

The processor 710 may be a central processing unit CPU, an application specific integrated circuit ASIC (Application Specific Integrated Circuit), or one or more integrated circuits configured to implement this embodiment of the present invention.

The memory 730 is configured to store the program 732. The memory 730 may include a high-speed RAM memory and may further include a non-volatile memory (non-volatile memory), for example, at least one disk memory. The program 732 may specifically include a receiving unit 51, a processing unit 52, a DRE unit 53, and a sending unit 54.

The receiving unit 51 is configured to receive a VDI file transfer message that includes compressed data, where the compressed data is derived from a data portion separated from the VDI file transfer message.

The processing unit 52 is configured to parse the VDI file transfer message received by the receiving unit 51 to obtain the compressed data.

The DRE unit 53 is configured to decompress the compressed data obtained by the processing unit 52 to obtain decompressed data.

The sending unit 53 is configured to send a VDI file transfer message that includes the data decompressed by the DRE unit 53.

The VDI file transfer message includes a write request message and a read response message.

It should be noted that, the specific implementation of each unit of the program 732 is the same as that of a corresponding unit in the embodiment illustrated in FIG. 5.

The VDI file transfer apparatus provided in the present invention separates a VDI file transfer message from a VDI message, separates a data portion from the VDI file transfer message, and compresses the data portion and sends it. This ensures that what is compressed is content of the data portion in the VDI file transfer message. During data compressing, neither other VDI messages nor a data header of the VDI file transfer message exists. Therefore, a high compressibility can be achieved in a VDI file transfer process.

The foregoing descriptions are merely specific embodiments of the present invention, but are not intended to limit the protection scope of the present invention. Any variation or replacement readily figured out by a person skilled in the art within the technical scope disclosed in the present invention shall fall within the protection scope of the present invention. Therefore, the protection scope of the present invention shall be subject to the protection scope of the claims.

## Claims

1. A virtual desktop infrastructure VDI file transfer method, comprising:
receiving VDI messages, wherein the VDI messages at least comprise a VDI file transfer message;
separating the VDI file transfer message from the VDI messages;
parsing the separated VDI file transfer message;
obtaining a data portion of the VDI file transfer message; and
compressing the data portion and sending a VDI file transfer message that comprises compressed data, wherein the compressed data is derived from the data portion.

2. The method according to claim 1, wherein the separating the VDI file transfer message from the VDI messages specifically is:
acquiring a VDI file transfer channel number; and
separating the VDI file transfer message from the VDI messages according to the acquired VDI file transfer channel number.

3. The method according to claim 2, wherein the acquiring a VDI file transfer channel number specifically is:
acquiring a VDI negotiation message, wherein the VDI negotiation message comprises the VDI file transfer channel number; and
acquiring the VDI file transfer channel number according to the VDI negotiation message.

4. The method according to any one of claims 1 to 3, wherein the VDI file transfer message comprises a write request message and a read response message.

5. A virtual desktop infrastructure VDI file transfer method, comprising:
receiving a VDI file transfer message that comprises compressed data, wherein the compressed data is derived from a data portion separated from the VDI file transfer message;
parsing the received VDI file transfer message;
obtaining the compressed data;
decompressing the compressed data to obtain decompressed data; and
sending a VDI file transfer message that comprises the decompressed data.

6. The method according to claim 5, wherein the VDI file transfer message comprises a write request message and a read response message.

7. A virtual desktop infrastructure VDI file transfer apparatus, comprising:
a receiving unit, configured to receive VDI messages, wherein the VDI messages at least comprise a VDI file transfer message;
a processing unit, configured to separate the VDI file transfer message from the VDI messages received by the receiving unit, wherein
the processing unit is further configured to parse the separated VDI file transfer message to obtain a data portion of the VDI file transfer message;
a data redundancy elimination DRE unit, configured to compress the data portion of the VDI file transfer message, wherein the data portion is obtained by the processing unit; and
a sending unit, configured to send a VDI file transfer message that comprises data compressed by the DRE unit, wherein the compressed data is derived from the data portion.

8. The apparatus according to claim 7, wherein the processing unit comprises:
an acquiring module, configured to acquire a VDI file transfer channel number; and
a separating module, configured to separate the VDI file transfer message from the VDI messages according to the VDI file transfer channel number acquired by the acquiring module.

9. The apparatus according to claim 8, wherein the acquiring module is specifically configured to:
acquire a VDI negotiation message, wherein the VDI negotiation message comprises the VDI file transfer channel number; and
acquire the VDI file transfer channel number according to the VDI negotiation message.

10. The apparatus according to any one of claims 7 to 9, wherein the VDI file transfer message comprises a write request message and a read response message.

11. A virtual desktop infrastructure VDI file transfer apparatus, comprising:
a receiving unit, configured to receive a VDI file transfer message that comprises compressed data, wherein the compressed data is derived from a data portion separated from the VDI file transfer message;
a processing unit, configured to parse the VDI file transfer message received by the receiving unit to obtain the compressed data;
a data redundancy elimination DRE unit, configured to decompress the compressed data obtained by the processing unit to obtain decompressed data; and
a sending unit, configured to send a VDI file transfer message that comprises the data decompressed by the DRE unit.

12. The apparatus according to claim 11, wherein the VDI file transfer message comprises a write request message and a read response message.

13. A virtual desktop infrastructure VDI file transfer apparatus, comprising a processor, a communications interface, a memory, and a bus, wherein:
the processor, the communications interface, and the memory communicate with each other through the bus;
the communications interface is configured to communicate with an external network element;
the memory is configured to store a program; and
the processor is configured to execute the program, wherein
the program comprises a receiving unit, a processing unit, a data redundancy elimination DRE unit, and a sending unit, wherein
the receiving unit is configured to receive VDI messages, wherein the VDI messages at least comprise a VDI file transfer message;
the processing unit is configured to separate the VDI file transfer message from the VDI messages received by the receiving unit;
the processing unit is further configured to parse the separated VDI file transfer message to obtain a data portion of the VDI file transfer message;
the DRE unit is configured to compress the data portion of the VDI file transfer message, wherein the data portion is obtained by the processing unit; and
the sending unit is configured to send a VDI file transfer message that comprises data compressed by the DRE unit, wherein the compressed data is derived from the data portion.

14. The apparatus according to claim 13, wherein the processing unit comprises:
an acquiring module, configured to acquire a VDI file transfer channel number; and
a separating module, configured to separate the VDI file transfer message from the VDI messages according to the VDI file transfer channel number acquired by the acquiring module.

15. The apparatus according to claim 14, wherein the acquiring module is specifically configured to:
acquire a VDI negotiation message, wherein the VDI negotiation message comprises the VDI file transfer channel number; and
acquire the VDI file transfer channel number according to the VDI negotiation message.

16. The apparatus according to any one of claims 13 to 15, wherein the VDI file transfer message comprises a write request message and a read response message.

17. A virtual desktop infrastructure VDI file transfer apparatus, comprising a processor, a communications interface, a memory, and a bus, wherein:
the processor, the communications interface, and the memory communicate with each other through the bus;
the communications interface is configured to communicate with an external network element;
the memory is configured to store a program; and
the processor is configured to execute the program, wherein
the program comprises a receiving unit, a processing unit, a data redundancy elimination DRE unit, and a sending unit, wherein
the receiving unit is configured to receive a VDI file transfer message that comprises compressed data, wherein the compressed data is derived from a data portion separated from the VDI file transfer message;
the processing unit is configured to parse the VDI file transfer message received by the receiving unit to obtain the compressed data;
the DRE unit is configured to decompress the compressed data obtained by the processing unit to obtain decompressed data; and
the sending unit is configured to send a VDI file transfer message that comprises the data decompressed by the DRE unit.

18. The apparatus according to claim 17, wherein the VDI file transfer message comprises a write request message and a read response message.
